# FASCICULE DE BREVET EUROPEEN

(11) **EP 3 939 152 B1**
(45) Date de publication et mention de la délivrance du brevet: **20.11.2024**
(21) Numéro de dépôt: 20721676.3
(22) Date de dépôt: 12.03.2020
(51) Int. Cl.: H02M 3/335, H02M 7/48

(54) **CONVERTISSEUR DE PUISSANCE ISOLE ET RECONFIGURABLE**
ISOLIERTER UND REKONFIGURIERBARER LEISTUNGSWANDLER
ISOLATED AND RECONFIGURABLE POWER CONVERTER

(30) Priorité: 14.03.2019 FR 1902617
(43) Date de publication de la demande: 19.01.2022
(73) Titulaire: SAFRAN, 75015 Paris (FR)
(72) Inventeur: NGOUA TEU MAGAMBO, Jean-sylvio, 77550 MOISSY-CRAMAYEL (FR); GAUTIER, Cyrille, 77550 MOISSY-CRAMAYEL (FR)
(74) Mandataire: Ernest Gutmann - Yves Plasseraud S.A.S.
(86) Numéro de dépôt international: PCT/FR2020/000055
(87) Numéro de publication internationale: WO 2020/183076

(56) Documents cités:
- EP-A1- 2 863 531
- CN-A- 109 302 070
- US-A1- 2013 265 804
- JALBRZYKOWSKI S ET AL: "A Dual Full-Bridge Resonant Class-E Bidirectional DC DC Converter", IEEE TRANSACTIONS ON INDUSTRIAL ELECTRONICS, IEEE SERVICE CENTER, PISCATAWAY, NJ, USA, vol. 58, no. 9, 1 September 2011 (2011-09-01), pages 3879 - 3883, XP011383155, ISSN: 0278-0046, DOI: 10.1109/TIE.2010.2100335
- ZHONG WENXING ET AL: "Reconfigurable Wireless Power Transfer Systems With High Energy Efficiency Over Wide Load Range", IEEE TRANSACTIONS ON POWER ELECTRONICS, INSTITUTE OF ELECTRICAL AND ELECTRONICS ENGINEERS, USA, vol. 33, no. 7, 1 July 2018 (2018-07-01), pages 6379 - 6390, XP011679845, ISSN: 0885-8993, [retrieved on 20180319], DOI: 10.1109/TPEL.2017.2748161

## Description

### Domaine technique de l'invention

La présente invention concerne les réseaux électriques embarqués dans les aéronefs, et en particulier la structure des convertisseurs de puissance intégrés à ces réseaux électriques.

### Etat de la technique antérieure

Afin d'assurer l'alimentation des équipements embarqués dans un aéronef, de nombreux convertisseurs de puissance sont utilisés, permettant d'alimenter divers équipements en basse tension continue à partir d'un réseau de haute tension continue de l'aéronef.

De nombreux types de convertisseurs de puissance sont disponibles dans l'état de la technique, et sont choisis au regard du niveau de tension continue du réseau de l'aéronef et du niveau de tension souhaité pour le bon fonctionnement des équipements, ainsi qu'au regard de la commande du convertisseur. En particulier, les paramètres de la commande qui sont les plus décisifs sont la fréquence de découpage, le ou les rapports cycliques et le déphasage entre les ponts de puissance. Néanmoins, d'autres paramètres tels que les temps morts (délais de commutation entre deux bras de puissance) peuvent également impacter la qualité de la commande.

Classiquement, le réseau de haute tension continue embarqué dans l'aéronef délivre une tension continue nominale d'environ 270 V. Toutefois, la tension délivrée par ce réseau peut fortement varier, et peut donc être 10% voire 20% plus ou moins élevée que la tension nominale. Cette forte variation pouvant être liée à la charge du réseau ou à l'instabilité de la production d'électricité, impacte le point de fonctionnement du convertisseur. Ce dernier ayant été choisi et dimensionné pour convertir une haute tension continue de 270V en une basse tension continue variant entre 16V et 30V, le fonctionnement du convertisseur n'est plus optimisé lors de la variation de la tension délivrée par le réseau de haute tension continue embarqué.

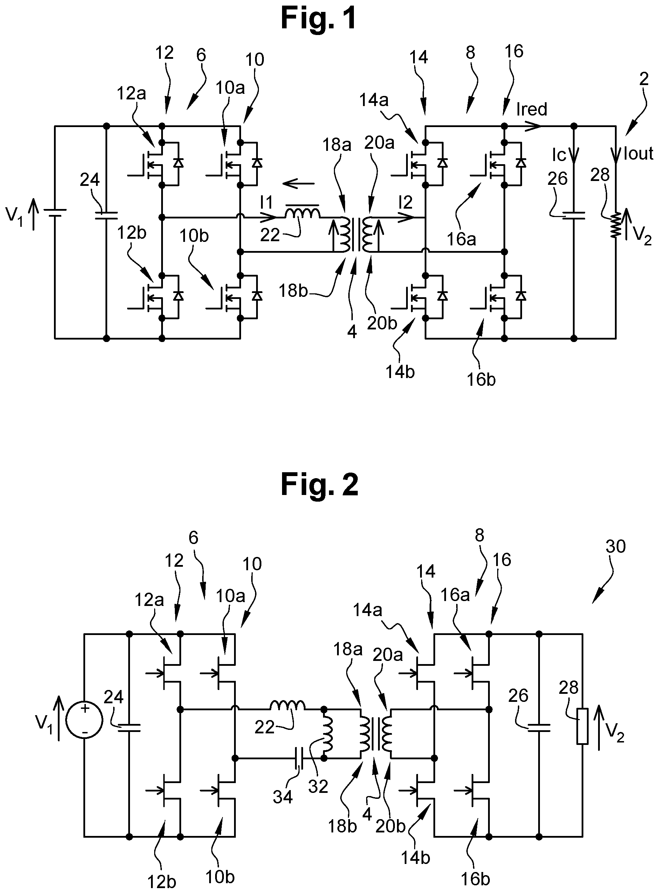

Deux exemples de convertisseurs de l'état de la technique sont illustrés aux figures 1 et 2.

La figure 1 illustre un exemple de structure de conversion 2 DC/DC isolée, également appelée en anglais *Dual Active Bridge (DAB).*

La structure comprend un convertisseur de puissance, comprenant en particulier un transformateur 4 isolé, apte à convertir une haute tension continue V1 appliquée aux bornes d'un premier pont en H, en une basse tension continue V2 appliquée aux bornes d'un deuxième pont en H. Les deux ponts en H 6, 8 comprennent respectivement quatre transistors 10a, 10b, 12a, 12b et 14a, 14b, 16a, 16b.

Les bornes primaires 18a, 18b du transformateur 4 sont connectées à une première 10 et une deuxième 12 branches du premier pont en H 6. En particulier, une inductance 22 est disposée entre une des bornes primaires 18a du transformateur 4 et la deuxième branche 12 du premier pont en H 6.

L'inductance 22, également appelée inductance de fuite, peut générer des surtensions lors de la coupure de courant dans le transformateur.

Les bornes secondaires 20a, 20b du transformateur 4 sont connectées à une première 14 et une deuxième 16 branches du deuxième pont en H 8.

Des condensateurs 24, 26 peuvent être disposés aux bornes de chacun des premier 6 et deuxième 8 ponts en H. Il s'agit de condensateurs de filtrage, leur rôle étant de réduire les ondulations des tensions d'entrée et de sortie du convertisseur. La résistance modélise les équipements alimentés par la tension V2 délivrée en sortie de la structure de conversion 2.

Une telle structure de conversion 2 permet de convertir à une fréquence fixe qui peut être dans une plage de 10kHz à 1MHz, la haute tension V1 entre 220V et 330V en une basse tension V2 entre 16V et 32V (notons qu'en remplaçant la résistance 28 par une source de tension, la structure devient réversible, V2 devient la tension d'entrée et V1 celle de sortie).

Dans le deuxième exemple de structure de conversion 30 illustrée à la figure 2, on retrouve le transformateur 4 convertissant une haute tension continue V1 en une basse tension continue V2, ces dernières étant respectivement appliquées aux bornes d'un premier pont en H 6 et d'un deuxième pont en H 8, tous deux respectivement constitués de quatre transistors 10a, 10b, 12a, 12b et 14a, 14b, 16a, 16b.

En plus d'une inductance de fuite 22, une inductance 32, aussi appelée inductance de magnétisation, est disposée entre les bornes primaires 18a, 18b du transformateur 4. Egalement, un condensateur 34 est disposé entre l'une des bornes primaires 18b du transformateur 4 et la première branche 10 du premier pont en H 6.

Une telle structure de conversion 30 comprend ainsi une structure résonnante composée des inductances 22 et 32 et du condensateur 34 et est également, appelée structure de conversion à résonance série-parallèle LLC. La structure résonante permet d'obtenir un courant sinusoïdal en sortie et de convertir à une fréquence variable qui peut être comprise entre 100 kHz et 3000 kHz selon la variation de charge du réseau embarqué. Les plages d'entrées et de sorties étant les mêmes que la structure DAB, c'est-à-dire respectivement entre 220V et 330V et entre 16V et 32V.

Ainsi, la structure 2 illustrée en figure 1 est optimisée, avec une commande simple, pour une haute tension appliquée en entrée au nominal de 270V et la structure 30 illustrée en figure 2 est optimisée pour une haute tension appliquée en entrée comprise entre 220 V et 330 V. En dehors de ces plages, ces deux structures de conversion 2, 30 ne se comportent pas de manière optimale, et donc se retrouvent chacune limitées, lors de variations de tension délivrée par le réseau de haute tension continue embarqué de l'aéronef.

Le document EP 2 863 531 A1 divulgue une topologie de conversion reconfigurable.

L'invention vise à remédier aux inconvénients précités, de façon fiable, simple et peu onéreuse.

### Résumé de l'invention

L'invention est définie par les caractéristiques de la revendication indépendante. Les revendications dépendantes décrivent des modes de réalisation avantageux de l'invention.

Le présent document porte sur un système de conversion de puissance, pour réseau électrique embarqué d'un aéronef, apte à convertir une haute tension continue en une basse tension continue et inversement, le système comprenant :
- au moins un premier bus de haute tension continue V_{bus1} et au moins un deuxième bus de basse tension continue V_{bus2} ;
- un premier pont en H disposé entre des bornes du premier bus et comprenant une première et une deuxième branches ;
- un deuxième pont en H disposé entre des bornes du deuxième bus et comprenant une première et deuxième branches ;
- un convertisseur de puissance, apte à transformer une haute tension continue V_{bus1} en basse tension continue V_{bus2} et/ou inversement, comprenant une première et une seconde bornes primaires et au moins une première et une seconde bornes secondaires reliées respectivement à la première branche et la deuxième branche du deuxième pont en H;
- au moins une première inductance disposée en série entre la deuxième branche du premier pont en H et la première borne primaire du convertisseur de puissance ;caractérisé en ce que le système comprend en outre :
   - au moins un premier condensateur dont une première borne est reliée à la première branche du premier pont en H ;
   - au moins un deuxième condensateur dont une première borne est reliée à la première borne primaire du convertisseur de puissance ;
   - des moyens de commutation aptes à commander l'ouverture ou la fermeture de la circulation de courant, ces moyens de commutation étant configurés de manière à ce que le système fonctionne au moins selon les configurations suivantes :
      - une première configuration formant un convertisseur DC/DC isolé dans lequel la seconde borne primaire du convertisseur de puissance est reliée à la première branche du premier pont en H ;
      - une deuxième configuration formant un convertisseur DC/DC isolé comprenant un circuit de résonance formé par :
         - la première inductance, et
         - le premier condensateur dont une seconde borne est reliée à la seconde borne primaire du convertisseur de puissance ;
      - une troisième configuration formant un convertisseur DC/DC isolé comprenant un circuit de résonance formé par :
         - le premier condensateur, dont une seconde borne est reliée à la seconde borne primaire du convertisseur de puissance,
         - le second condensateur, dont une seconde borne est reliée à la seconde borne primaire du convertisseur de puissance, et
         - la première inductance.

Un tel système permet ainsi d'optimiser le fonctionnement du convertisseur de puissance, en proposant au moins trois configurations de fonctionnement. Ainsi, en fonction de la plage de fonctionnement en entrée, le système fonctionne selon l'une des trois configurations par le biais de moyens de commutation, permettant alors de couvrir une plus large plage de fonctionnement qu'avec un système ayant une configuration figée.

Le système peut ainsi fonctionner selon une première configuration similaire à une structure de conversion isolée dite DAB, une deuxième configuration similaire une structure de conversion isolée comprenant un circuit de résonance LC, et une troisième configuration similaire à une structure de conversion isolée comprenant un circuit de résonnance LCC. Ainsi, les moyens de commutation permettent d'activer ou non les circuits de résonnance suivant la configuration du système de conversion souhaitée.

Avec une commande relativement simple, il est alors possible de reconfigurer le système de conversion, en maintenant un bon niveau de rendement du système de conversion de puissance.

Le présent système de conversion reconfigurable présente ainsi une compatibilité électromagnétique (CEM) satisfaisante. La réduction des contraintes CEM provient principalement de l'élargissement de la plage de fréquence de commutation. En effet, en augmentant les valeurs de ces fréquences, cela permettrait de diminuer la taille des composants passifs qui constituent le filtre CEM.

Les moyens de commutation peuvent comprendre un premier commutateur, un deuxième commutateur et un troisième commutateur.

Selon une autre caractéristique du système de conversion :
- le second commutateur peut être disposé entre le premier condensateur et la seconde borne primaire du convertisseur de puissance ;
   - le premier commutateur peut être disposé entre la première branche du pont en H et la seconde borne primaire du convertisseur de puissance ;
   - le troisième commutateur peut être disposé entre le deuxième condensateur et la seconde borne primaire du convertisseur de puissance.

Ainsi, en ouvrant et/ou fermant les commutateurs, il est possible de reconfigurer le système de conversion de sorte à le faire fonctionner :
- tel une structure DAB, où l'inductance de fuite fait partie de la structure. En réponse à une commande relativement simple telle que la modulation Phase-Shift, la plage de fonctionnement optimal est restreinte au point nominal soit une tension d'entrée égale à 270V ± 5% et une tension de sortie égale à 28V ± 5% en sortie ;
- tel une structure de conversion isolée comprenant un circuit de résonance LLC formé par les inductances et le condensateur. En réponse à une commande relativement simple, cette structure est adaptée aux variations de charges et de tensions, avec une fréquence de commutation variant dans une plage réduite. Ce convertisseur peut fonctionner avec une tension d'entrée égale à 270 V ± 20% et une tension de sortie comprise entre 16V et 32V.
- tel une structure de conversion isolée comprenant un circuit de résonnance LCC formé par l'inductance et les condensateurs. En réponse à une commande relativement simple, cette structure est adaptée aux variations de charges et de tensions, avec une fréquence de commutation variant dans une plage large. Ce convertisseur peut fonctionner avec une tension d'entrée égale à 270 V ± 20% et une tension de sortie comprise entre 16V et 32V.

Les moyens de commutation peuvent comprendre un module de reconfiguration, apte à piloter individuellement les premier, deuxième et troisième commutateurs de sorte à les maintenir dans un état ouvert et/ou dans un état fermé.

Le pilotage par le biais de ce module de reconfiguration permet, de manière centralisée, de commuter entre les trois configurations.

En particulier, le module de reconfiguration peut piloter les premier, deuxième et troisième commutateurs de sorte que :
- dans la première configuration, le premier commutateur est maintenu à l'état fermé, et les deuxième commutateur et troisième commutateur sont maintenus à l'état ouvert ;
- dans la deuxième configuration, le deuxième commutateur est maintenu à l'état fermé, et les premier et troisième commutateurs sont maintenus à l'état ouvert ;
- dans la troisième configuration, le premier commutateur est maintenu à l'état ouvert, et les deuxième et troisième commutateurs sont maintenus à l'état fermé.

Le système peut comprendre une deuxième inductance, disposée entre les bornes primaires du convertisseur de puissance, de sorte que dans la deuxième configuration, le circuit de résonance est formé par la première inductance, la deuxième inductance et le premier condensateur dont une seconde borne est reliée à la seconde borne primaire du convertisseur de puissance.

Ainsi, la deuxième configuration peut fonctionner tel qu'une structure de conversion isolée comprenant un circuit de résonance LLC formé par les inductances, et le condensateur dans une plage de tension d'entrée prenant des valeurs entre 220 V et 330V avec une fréquence de commutation variable dans une plage réduite.

Le premier commutateur, deuxième commutateur et troisième commutateur peuvent comprendre des interrupteurs et des transistors.

Ainsi, l'utilisation des commutateurs pouvant être commandés, tel que des interrupteurs et des transistors, permet de commuter, par le biais d'une commande simple de ces commutateurs, entre les trois configurations du système de conversion. Les interrupteurs utilisés peuvent être des interrupteurs électriques et/ou mécaniques. Egalement, les transistors utilisés peuvent être par exemple des transistors bipolaires, des transistors bipolaires à grille isolée, des transistors à effet de champ à grille métal-oxyde, des transistors au nitrure de gallium.

Un condensateur Cbus1 peut être disposé entre les bornes de la deuxième branche du premier pont en H. De manière analogue un condensateur Cbus2 peut être disposé entre les bornes de la deuxième branche du deuxième pont en H. Ces condensateurs assurent le filtrage des ondulations de tensions des bus de tension continue.

Le premier et/ou le deuxième pont en H peuvent comprendre chacun au moins quatre composants de puissance. Les quatre composants de puissance du premier pont peuvent être soit des transistors soit des transistors avec des diodes en anti-parallèle. Les quatre composants de puissance du premier pont peuvent être soit des diodes soit des transistors. De préférence, les diodes ne sont utilisées que pour le deuxième pont en H, le premier pont en H nécessitant des interrupteurs commandables pour fournir une tension alternative en entrée du transformateur.

Le système peut comprendre un troisième bus de basse tension continue Vbus3 et dans lequel le convertisseur de puissance comprend une troisième et une quatrième bornes secondaires reliées respectivement à une première branche et une deuxième branche d'un troisième pont en H disposé aux bornes du troisième bus de haute tension continue Vbus3.

Le système peut présenter une plage de fonctionnement comprise entre 220 V et 330 V aux bornes du premier bus.

### Brève description des figures

[Fig. 1] déjà décrite précédemment, représente une structure de conversion DC/DC isolée de type *Dual Active Bridge* (DAB) de l'art antérieur ;
[Fig. 2] déjà décrite précédemment, représente une deuxième structure de conversion DC/DC isolée de l'art antérieur ;
[Fig. 3] représente le système de conversion selon l'invention de cette présente demande. Description détaillée de l'invention.

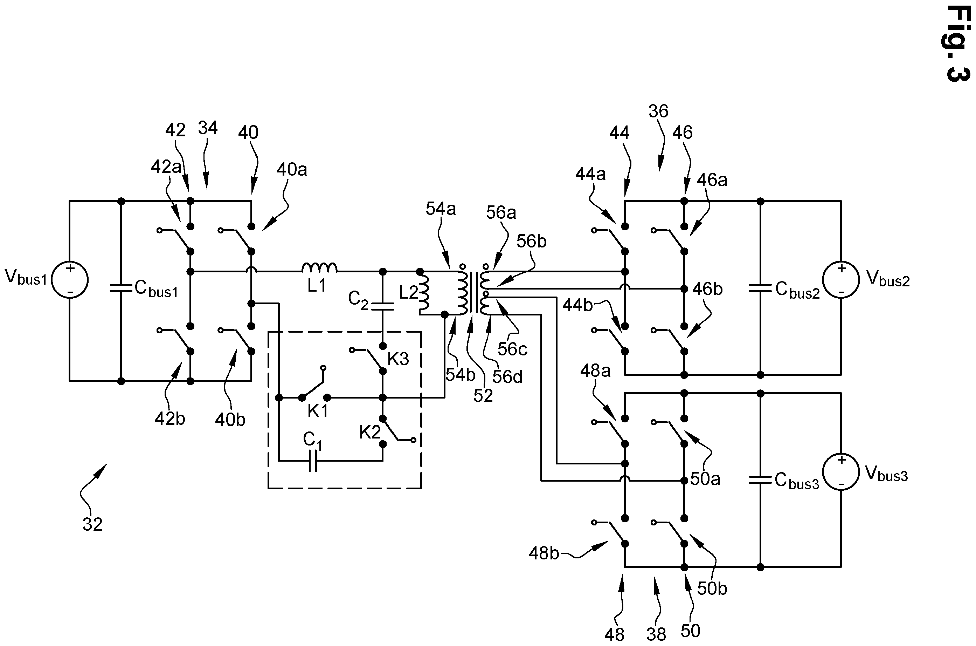

On se réfère ci-après à la figure 3 représentant le système de conversion de puissance 32 selon l'invention destiné à convertir une haute tension continue V_{bus1}, délivrée par le réseau électrique embarqué d'un aéronef, en au moins une basse tension continue V_{bus2}, dont le niveau est adapté pour alimenter les divers équipements de l'aéronef, tels que par exemple les éoliennes de secours (connu sous l'acronyme RAT signifiant en anglais *Ram air turbine*)*,* batteries, etc.

Le système de conversion 32 présenté en figure 3 est apte à convertir une haute tension continue V_{bus1} en deux tensions basses tensions continues V_{bus2} et V_{bus3}, pas nécessairement identiques, aptes à alimenter divers équipements de l'aéronef.

Le système de conversion de puissance 32 peut également être apte à réaliser la conversion en sens inverse. Dans ce cas, certains des composants du système sont choisis en conséquence comme cela sera détaillé plus loin.

Le schéma électrique illustré en figure 3, est une représentation simplifiée du système de conversion 32 selon l'invention. Pour simplifier, le réseau embarqué de l'aéronef est représenté par un premier bus de haute tension continue V_{bus1}, et deux basses tensions continues sont représentées par un deuxième bus de basse tension continue V_{bus2} et un troisième bus de basse tension continue V_{bus3} aptes à alimenter les équipements de l'aéronef. Ces trois bus de tensions sont respectivement aux bornes des condensateurs C_{bus1}, C_{bus2} et C_{bus3}. Ces trois condensateurs sont des condensateurs de filtrage permettant de réduire les variations de tension en entrée et en sortie du convertisseur, c'est-à-dire de lisser les tensions converties.

Le système de conversion 32 également comprend un premier 34, un deuxième 36 et un troisième 38 pont en H. Chacun de ces ponts 34, 36, 38 comprenant une première branche 40, 44, 48 et une deuxième branche 42, 46, 50. Le premier pont en H 34 est disposé aux bornes du condensateur C_{bus1}, le deuxième pont en H 36 est disposé aux bornes du condensateur C_{bus2} et le troisième pont en H 38 est disposé aux bornes du condensateur C_{bus3}. Ainsi, la tension aux bornes du premier pont en H 34 est égale à la tension V_{bus1} du premier bus de haute tension continue. Egalement les tensions aux bornes des deuxième 36 et troisième 38 ponts en H sont respectivement égales à la tension V_{bus2} du deuxième bus de basse tension continue et à la tension V_{bus3} du troisième bus de basse tension continue, tous deux destinés à alimenter les équipements embarqués.

La structure d'un pont en H étant connu de l'homme du métier, une description succincte en est faite ci-après. Chacun de ces ponts en H comprend une première branche 40, 44, 48 et une seconde branche 42, 46, 50, deux branches 40, 44, 48 et 42, 46, 50 dont les extrémités sont électriquement reliées entre elles deux à deux. Sur chacune des première branche 40, 44, 48 et seconde branche 42, 46, 50 sont disposés deux moyens de commutation 40a, 40b, 44a, 44b, 48a, 48b et 42a, 42b, 46a, 46b, 50a, 50b identiques sur toutes les branches 40, 44, 48 et 42, 46, 50. Ces moyens de commutation 40a, 40b, 44a, 44b, 48a, 48b et 42a, 42b, 46a, 46b, 50a, 50b peuvent être des composants de puissance uni ou bidirectionnels, commandables ou non commandables. De préférence, le premier pont H 34 comprend des composants de puissances commandés, c'est-à-dire des transistors ou des interrupteurs, uni ou bidirectionnels. Les deuxième 36 et troisième 38 ponts en H peuvent comprendre des composants de puissance commandés ou non commandés, c'est-à-dire des transistors, des diodes et des interrupteurs. Dans le cas où le système de conversion est apte à faire la conversion dans les deux sens, seuls des transistors ou des interrupteurs bidirectionnels peuvent être utilisés pour les deuxième 36 et troisième 38 ponts en H.

Ainsi, comme on peut le voir sur la figure 3, les extrémités des deuxièmes branches des premier 34, deuxième 36 et troisième 38 ponts en H sont respectivement électriquement reliés aux bornes de condensateurs C_{bus1}, C_{bus2} et C_{bus3}.

Le système 32 comprend en outre un convertisseur de puissance 52 qui est ici plus particulièrement un transformateur. Le transformateur 52 est dit à haute fréquence, il est monophasé, tel que connu dans l'état de la technique, apte à convertir la haute tension alternative issue du premier pont 34 en basse tension alternative issue du deuxième pont 36 et en une basse tension alternative issue du troisième pont 38 et/ou inversement. Le transformateur 52 comprend une première 54a et une seconde 54b bornes primaires et une première 56a, une deuxième 56b, une troisième 56c et une quatrième 56d bornes secondaires.

Les premier 34, deuxième 36 et troisième 38 ponts en H sont électriquement reliés aux bornes primaires 54a, 54b et aux bornes secondaires 56a, 56b, 56c, 56d du convertisseur de puissance 32.

Comme cela est visible sur la figure 3, la première borne secondaire 56a est électriquement reliée à la première branche 44 du deuxième pont en H 36, en particulier aux deux composants de puissance 44a et 44b. Similairement, la deuxième borne secondaire 56b est électriquement reliée à la deuxième branche 46 du deuxième pont en H 36, en particulier aux deux composants de puissance 46a et 46b.

La troisième borne secondaire 56c est électriquement reliée à la première branche 48 du troisième pont en H 38, en particulier aux deux composants de puissance 48a et 48b. Similairement, la quatrième borne secondaire 56d est électriquement reliée à la deuxième branche 50 du troisième pont en H 38, en particulier aux deux composants de puissance 50a et 50b.

Enfin, la première borne primaire 54a est indirectement et électriquement reliée à la deuxième branche 42 du premier pont en H 34, en particulier aux deux composants de puissance 42a et 42b. Similairement, la seconde borne primaire 54b est indirectement et électriquement reliée à la première branche 40 du premier pont en H 34, en particulier aux deux composants de puissance 40a et 40b.

Des composants sont disposés entre la deuxième branche 42 et la première borne primaire 54a et entre la première branche 40 et la seconde borne primaire 54b.

Une première inductance L1 est disposée en série entre la deuxième branche 42 du premier pont en H 34 et la première borne primaire 54a du convertisseur de puissance 52. Cette première inductance L1 peut, si le transformateur 52 haute fréquence est dimensionné et optimisé en conséquence, être remplacée par l'inductance de fuite du transformateur, qui est un défaut du transformateur limitant la puissance convertie du transformateur.

Une deuxième inductance L2 est disposée entre les bornes primaires 54a, 54b du convertisseur de puissance 52. Cette deuxième inductance L2 peut, si le transformateur 52 haute fréquence est dimensionnée et optimisé en conséquence, être remplacée par l'inductance de magnétisation du transformateur, qui est l'inductance propre de l'enroulement primaire du transformateur.

Un premier condensateur C1 dont une première borne est reliée à la première branche 40 du premier pont en H 34 et dont une seconde borne peut être reliée à la seconde borne primaire 54b du convertisseur de puissance 52 par le biais d'un second commutateur K2. Ainsi, le premier commutateur K1 est disposé entre le premier condensateur C1 et la seconde borne primaire 54b du convertisseur de puissance 52.

Un deuxième condensateur C2 dont une première borne est reliée à la première borne primaire 54a du convertisseur de puissance 52 et dont une seconde borne peut être reliée à la seconde borne primaire 54b du convertisseur de puissance 52 par le biais d'un troisième commutateur K3. Ainsi, le troisième commutateur K3 est disposé entre le deuxième condensateur C2 et la seconde borne primaire 54b du convertisseur de puissance 52.

Un premier commutateur K1 est disposé entre la première branche 40 du premier pont en H 34 et la seconde borne primaire 54b du convertisseur de puissance 52.

Les trois commutateurs K1, K2 et K3 sont des interrupteurs, électrique ou mécaniques, et/ou des transistors commandables qui forment en partie des moyens de commutations aptes à commander l'ouverture ou la fermeture de la circulation de courant. En particulier, les moyens de commutations comprennent un module de reconfiguration apte à piloter individuellement les commutateurs K1, K2 et K3 de sorte à les maintenir dans un état ouvert et/ou dans un état fermé.

Ainsi, les commutateurs K1, K2 et K3 sont aptes de par leur disposition, à permettre au système de fonctionner selon trois configurations.

Le système de conversion 32 est configuré selon la première configuration lorsque le module de reconfiguration commande le premier commutateur K1 pour le maintenir à l'état fermé, et commande les deuxième K2 et troisième K3 commutateurs pour les maintenir à l'état ouvert. Dans la première configuration, le système de conversion 32 forme un convertisseur DC/DC isolé de type *Dual Active Bridge.* Dans cette configuration, la seconde borne primaire 54b du convertisseur de puissance 52 est directement reliée à la première branche 40 du premier pont en H 34. Avec une commande simple, cette configuration est particulièrement adaptée pour une tension V_{bus1} proche de la tension nominale de 270V avec une variation d'environ 5% autour de cette valeur.

Le système de conversion 32 est configuré selon la deuxième configuration lorsque le module de reconfiguration commande le deuxième commutateur K2 pour le maintenir à l'état fermé, et les premier K1 et troisième K3 commutateurs pour les maintenir à l'état ouvert. Dans cette deuxième configuration, le système de conversion 32 forme un convertisseur DC/DC isolé avec un circuit de résonance formé par
- la première inductance L1,
- la deuxième inductance L2, et
- le premier condensateur C1 dont une seconde borne est reliée à la seconde borne primaire du convertisseur de puissance.

Le circuit de résonance LLC formé par L1, L2 et C1 rend le système de conversion 32 particulièrement adapté pour une tension V_{bus1} comprise dans la plage [220 V ; 330 V] avec une faible plage de fréquence de commutation nécessaire comprise entre fmin et trois fois fmin (50kHz<fmin<500kHz) et un fonctionnement en mode de conduction continu ou discontinu.

Le système de conversion 32 est configuré selon la troisième configuration lorsque le module de reconfiguration commande le premier commutateur K1 pour le maintenir à l'état ouvert, et les deuxième K2 et troisième K3 commutateurs pour les maintenir à l'état fermé. Dans cette troisième configuration, le système de conversion 32 forme un convertisseur DC/DC isolé avec un circuit de résonance formé par :
- le premier condensateur C1, dont une seconde borne est reliée à la seconde borne primaire du convertisseur de puissance,
- le second condensateur C2, dont une seconde borne est reliée à la seconde borne primaire du convertisseur de puissance, et
- la première inductance L1.

Le circuit de résonnance LCC formé par L1, C1 et C2 rend le système de conversion particulièrement adapté pour une tension V_{bus1} comprise dans la plage [220 V ; 330 V] avec une large plage de fréquence de commutation nécessaire et un fonctionnement uniquement en mode de conduction discontinu, c'est-à-dire une fréquence de commutation comprise entre 50 kHz et 3MHz.

Le tableau 1 récapitule ci-après l'état des commutateurs K1, K2, K3 dans chacune des trois configurations :

**[Tableau 1]**

| | Configuration 1 - DAB | Configuration 2 - LLC | Configuration 3 - LCC |
|---|---|---|---|
| K1 | Fermé | Ouvert | Ouvert |
| K2 | Ouvert | Fermé | Fermé |
| K3 | Ouvert | Ouvert | Fermé |

Ainsi, en fonction de la variation de la tension V_{bus1} délivré par le réseau embarqué de l'aéronef, le module de reconfiguration pilote les commutateurs de sorte à assurer le fonctionnement du système de conversion 32 selon une configuration adaptée à la tension V_{bus1}.

Avec une commande simple de la structure (par exemple une commande phase-shift), continue même en cas de modification de configuration, les conditions de commutation pour un fonctionnement optimal sont les suivantes :
- Point de fonctionnement nominal (tension d'entrée égale à 270V et une tension de sortie égale à28V) : Configuration 1 en DAB.
- Points de fonctionnement différents du nominal, en conduction discontinue avec une large plage de fréquence : Configuration 3 en LCC.
- Points de fonctionnement différents du nominal, en conduction continue avec une plage de fréquence réduite : Configuration 2 en LLC.

## Revendications

1. Système de conversion de puissance, pour réseau électrique embarqué d'un aéronef, apte à convertir une haute tension continue en une basse tension continue et inversement, le système comprenant :
- au moins un premier bus de haute tension continue (V_{bus1}) et au moins un deuxième bus de basse tension continue (V_{bus2}) ;
- un premier pont (34) en H disposé entre des bornes du premier bus et comprenant une première (40) et une deuxième (42) branches ;
- un deuxième pont (36) en H disposé entre des bornes du deuxième bus et comprenant une première (44) et deuxième (46) branches ;
- un convertisseur de puissance (52), apte à transformer une haute tension continue (V_{bus1}) en basse tension continue (V_{bus2}) et/ou inversement, comprenant une première (54a) et une seconde (54b) bornes primaires et au moins une première (56a) et une seconde (56b) bornes secondaires reliées respectivement à la première branche (44) et la deuxième branche (46) du deuxième pont (36) en H;
- au moins une première inductance (L1) disposée en série entre la deuxième branche (42) du premier pont (34) en H et la première borne primaire (54a) du convertisseur de puissance (52); **caractérisé en ce que** le système comprend en outre :
- au moins un premier condensateur (C1) dont une première borne est reliée à la première branche (40) du premier pont (34) en H ;
- au moins un deuxième condensateur (C2) dont une première borne est reliée à la première borne primaire (54a) du convertisseur de puissance (52) ;
- des moyens de commutation aptes à commander l'ouverture ou la fermeture de la circulation de courant, ces moyens de commutation étant configurés de manière à ce que le système fonctionne selon les configurations suivantes :
- une première configuration formant un convertisseur DC/DC isolé dans lequel la seconde borne primaire (54b) du convertisseur de puissance (52) est reliée à la première branche (40) du premier pont (34) en H ;
- une deuxième configuration formant un convertisseur DC/DC isolé comprenant un circuit de résonance formé par :
- la première inductance (L1), et
- le premier condensateur (C1) dont une seconde borne est reliée à la seconde borne primaire (54b) du convertisseur de puissance (52) ;
- une troisième configuration formant un convertisseur DC/DC isolé comprenant un circuit de résonance formé par :
- le premier condensateur (C1), dont une seconde borne est reliée à la seconde borne primaire (54b) du convertisseur de puissance (52),
- le second condensateur (C2), dont une seconde borne est reliée à la seconde borne primaire (54b) du convertisseur de puissance (52), et
- la première inductance (L1).

2. Système selon la revendication 1, dans lequel les moyens de commutation comprennent un premier (K1), un deuxième (K2) et un troisième (K3) commutateurs.

3. Système selon la revendication 2, dans lequel :
- le second commutateur (K2) est disposé entre le premier condensateur (C1) et la seconde borne primaire (54b) du convertisseur de puissance (52) ;
- le premier commutateur (K1) est disposé entre la première branche (40) du premier pont (34) en H et la seconde borne primaire (54b) du convertisseur de puissance (52) ;
- le troisième commutateur (K3) est disposé entre le deuxième condensateur (C2) et la seconde borne primaire (54b) du convertisseur de puissance (52).

4. Système selon la revendication 2 ou 3, dans lequel les moyens de commutation comprennent un module de reconfiguration, apte à piloter individuellement les premier, deuxième et troisième commutateurs de sorte à les maintenir dans un état ouvert et/ou dans un état fermé.

5. Système selon la revendication 4, dans lequel le module de reconfiguration pilote les premier, deuxième et troisième commutateurs de sorte que :
- dans la première configuration, le premier commutateur (K1) est maintenu à l'état fermé, et les deuxième (K2) et troisième (K3) commutateurs sont maintenus à l'état ouvert ;
- dans la deuxième configuration, le deuxième commutateur (K2) est maintenu à l'état fermé, et les premier (K1) et troisième (K3) commutateurs sont maintenus à l'état ouvert ;
- dans la troisième configuration, le premier commutateur (K1) est maintenu à l'état ouvert, et les deuxième (K2) et troisième (K3) commutateurs sont maintenus à l'état fermé.

6. Système selon l'une des revendications précédentes, comprenant une deuxième inductance (L2), disposée entre les bornes primaires (54a, 54b) du convertisseur de puissance (52), de sorte que dans la deuxième configuration, le circuit de résonance est formé par la première inductance (L1), la deuxième inductance (L2) et le premier condensateur (C1) dont une seconde borne est reliée à la seconde borne primaire (54b) du convertisseur de puissance (52).

7. Système selon l'une des revendications 2 à 6, dans lequel les premier (K1), deuxième (K2) et troisième (K3) commutateurs comprennent des interrupteurs et/ou des transistors.

8. Système selon l'une des revendications précédentes, dans lequel un condensateur (Cbus1) est disposé entre les bornes de la deuxième branche (42) du premier pont en H (34).

9. Système selon l'une des revendications précédentes, dans lequel un condensateur (Cbus2) est disposé entre les bornes de la deuxième branche (46) du deuxième pont (36) en H.

10. Système selon l'une des revendications précédentes présentant une plage de fonctionnement comprise entre 220 V et 330 V aux bornes du premier bus.

11. Système selon l'une des revendications précédentes, dans lequel dans lequel le convertisseur de puissance est un transformateur isolé et monophasé.

12. Système selon l'une des revendications précédentes, comprenant un troisième bus de haute tension continue (Vbus3) et dans lequel le convertisseur de puissance comprend une troisième et quatrième bornes secondaires reliées respectivement à une première branche et une deuxième branche d'un troisième pont en H disposé au bornes du troisième bus de haute tension continue (Vbus3).

13. Système selon l'une des revendications précédentes, dans lequel le premier et/ou le deuxième pont en H comprennent chacun quatre composants de puissance.

14. Système selon la revendication 13, dans lequel les quatre composants de puissance du premier pont sont des transistors.

15. Système selon la revendication 13 ou 14, dans lequel les quatre composants de puissance du premier pont sont soit des diodes soit des transistors.

## Patentansprüche

1. Leistungsumwandlungssystem für das elektrische Bordnetz eines Luftfahrzeugs, das dazu geeignet ist, eine hohe Gleichspannung in eine niedrige Gleichspannung und umgekehrt umzuwandeln, wobei das System umfasst:
- zumindest einen ersten Bus für hohe Gleichspannung (V_{bus1}) und zumindest einen zweiten Bus für niedrige Gleichspannung (V_{bus2});
- eine erste H-Brücke (34), die zwischen Anschlüssen des ersten Busses angeordnet ist und einen ersten (40) und einen zweiten (42) Zweig umfasst;
- eine zweite H-Brücke (36), die zwischen Anschlüssen des zweiten Busses angeordnet ist und einen ersten (44) und einen zweiten (46) Zweig umfasst;
- einen Leistungswandler (52), der dazu geeignet ist, eine hohe Gleichspannung (V_{bus1}) in eine niedrige Gleichspannung (V_{bus2}) und/oder umgekehrt umzuwandeln und einen ersten (54a) und eine zweiten (54b) Primäranschluss und zumindest einen ersten (56a) und einen zweiten (56b) Sekundäranschluss umfasst, die jeweils mit dem ersten Zweig (44) bzw. dem zweiten Zweig (46) der zweiten H-Brücke (36) verbunden sind;
- zumindest eine erste Induktivität (L1), die in Reihe zwischen dem zweiten Zweig (42) der ersten H-Brücke (34) und dem ersten Primäranschluss (54a) des Leistungswandlers (52) angeordnet ist; **dadurch gekennzeichnet, dass** das System ferner umfasst:
- zumindest einen ersten Kondensator (C1), von dem ein erster Anschluss mit dem ersten Zweig (40) der ersten H-Brücke (34) verbunden ist;
- zumindest einen zweiten Kondensator (C2), von dem ein erster Anschluss mit dem ersten Primäranschluss (54a) des Leistungswandlers (52) verbunden ist;
- Schaltmittel, die dazu geeignet sind, das Öffnen oder Schließen des Stromflusses zu steuern, wobei diese Schaltmittel so ausgelegt sind, dass das System gemäß folgender Konfigurationen betrieben wird:
- einer ersten Konfiguration, bei der ein isolierter Gleichspannungswandler gebildet ist, wobei der zweite Primäranschluss (54b) des Leistungswandlers (52) mit dem ersten Zweig (40) der ersten H-Brücke (34) verbunden ist;
- einer zweiten Konfiguration, bei der ein isolierter Gleichspannungswandler gebildet ist, der einen Resonanzkreis umfasst, bestehend aus:
- der ersten Induktivität (L1), und
- dem ersten Kondensator (C1), von dem ein zweiter Anschluss mit dem zweiten Primäranschluss (54b) des Leistungswandlers (52) verbunden ist;
- einer dritten Konfiguration, bei der ein isolierter Gleichspannungswandler gebildet ist, der einen Resonanzkreis umfasst, bestehend aus:
- dem ersten Kondensator (C1), von dem ein zweiter Anschluss mit dem zweiten Primäranschluss (54b) des Leistungswandlers (52) verbunden ist,
- dem zweiten Kondensator (C2), von dem ein zweiter Anschluss mit dem zweiten Primäranschluss (54b) des Leistungswandlers (52) verbunden ist, und
- der ersten Induktivität (L1).

2. System nach Anspruch 1,
wobei die Schaltmittel einen ersten (K1), einen zweiten (K2) und einen dritten (K3) Schalter umfassen.

3. System nach Anspruch 2, wobei:
- der zweite Schalter (K2) zwischen dem ersten Kondensator (C1) und dem zweiten Primäranschluss (54b) des Leistungswandlers (52) angeordnet ist;
- der erste Schalter (K1) zwischen dem ersten Zweig (40) der ersten H-Brücke (34) und dem zweiten Primäranschluss (54b) des Leistungswandlers (52) angeordnet ist;
- der dritte Schalter (K3) zwischen dem zweiten Kondensator (C2) und dem zweiten Primäranschluss (54b) des Leistungswandlers (52) angeordnet ist.

4. System nach Anspruch 2 oder 3,
wobei die Schaltmittel ein Rekonfigurationsmodul umfassen, das dazu geeignet ist, den ersten, zweiten und dritten Schalter individuell so anzusteuern, dass sie in einem offenen Zustand und/oder in einem geschlossenen Zustand gehalten werden.

5. System nach Anspruch 4,
wobei das Rekonfigurationsmodul den ersten, zweiten und dritten Schalter so ansteuert, dass:
- in der ersten Konfiguration der erste Schalter (K1) im geschlossenen Zustand gehalten wird und der zweite (K2) und der dritte (K3) Schalter im offenen Zustand gehalten werden;
- in der zweiten Konfiguration der zweite Schalter (K2) im geschlossenen Zustand gehalten wird und der erste (K1) und der dritte (K3) Schalter im offenen Zustand gehalten werden;
- in der dritten Konfiguration der erste Schalter (K1) im offenen Zustand gehalten wird und der zweite (K2) und der dritte (K3) Schalter im geschlossenen Zustand gehalten werden.

6. System nach einem der vorhergehenden Ansprüche,
umfassend eine zweite Induktivität (L2), die zwischen den Primäranschlüssen (54a, 54b) des Leistungswandlers (52) angeordnet ist, so dass in der zweiten Konfiguration der Resonanzkreis aus der ersten Induktivität (L1), der zweiten Induktivität (L2) und dem ersten Kondensator (C1) besteht, von dem ein zweiter Anschluss mit dem zweiten Primäranschluss (54b) des Leistungswandlers (52) verbunden ist.

7. System nach einem der Ansprüche 2 bis 6,
wobei der erste (K1), der zweite (K2) und der dritte (K3) Schalter Unterbrecher und/oder Transistoren umfassen.

8. System nach einem der vorhergehenden Ansprüche,
wobei ein Kondensator (Cbus1) zwischen den Anschlüssen des zweiten Zweigs (42) der ersten H-Brücke (34) angeordnet ist.

9. System nach einem der vorhergehenden Ansprüche,
wobei ein Kondensator (Cbus2) zwischen den Anschlüssen des zweiten Zweigs (46) der zweiten H-Brücke (36) angeordnet ist.

10. System nach einem der vorhergehenden Ansprüche mit einem Betriebsbereich zwischen 220 V und 330 V an den Anschlüssen des ersten Busses.

11. System nach einem der vorhergehenden Ansprüche,
wobei der Leistungswandler ein isolierter, einphasiger Transformator ist.

12. System nach einem der vorhergehenden Ansprüche,
umfassend einen dritten Bus für hohe Gleichspannung (Vbus3), wobei der Leistungswandler einen dritten und einen vierten Sekundäranschluss umfasst, die jeweils mit einem ersten Zweig bzw. einem zweiten Zweig einer dritten H-Brücke verbunden sind, die an den Anschlüssen des dritten Busses für hohe Gleichspannung (Vbus3) angeordnet ist.

13. System nach einem der vorhergehenden Ansprüche,
wobei die erste und/oder die zweite H-Brücke jeweils vier Leistungskomponenten umfassen.

14. System nach Anspruch 13,
wobei die vier Leistungskomponenten der ersten Brücke Transistoren sind.

15. System nach Anspruch 13 oder 14,
wobei die vier Leistungskomponenten der ersten Brücke entweder Dioden oder Transistoren sind.

## Claims

1. A power-conversion system, for an aircraft on-board power system, capable of converting high DC voltage to low DC voltage and vice versa, the system comprising:
- at least one first high-voltage DC bus (V_{bus1}) and at least one second low-voltage DC bus (V_{bus2});
- a first H-bridge (34) arranged between terminals of the first bus and comprising a first (40) and a second (42) branch;
- a second H-bridge (36) arranged between terminals of the second bus and comprising a first (44) and a second (46) branch;
- a power converter (52), capable of transforming a high DC voltage (V_{bus1}) into a low DC voltage (V_{bus2}) and/or vice versa, comprising a first (54a) and a second (54b) primary terminal and at least a first (56a) and a second (56b) secondary terminal connected respectively to the first branch (44) and the second branch (46) of the second H-bridge (36);
- at least a first inductance (L1) arranged in series between the second branch (42) of the first H-bridge (34) and the first primary terminal (54a) of the power converter (52); **characterized in that** the system further comprises :
- at least one first capacitor (C1), a first terminal of which is connected to the first branch (40) of the first H-bridge (34);
- at least one second capacitor (C2), a first terminal of which is connected to the first primary terminal (54a) of the power converter (52);
- a switching means capable of controlling the opening or closing of the current flow, these switching means being configured in such a way that the system operates according to the following configurations:
- a first isolated DC/DC converter configuration in which the second primary terminal (54b) of the power converter (52) is connected to the first branch (40) of the first H-bridge (34);
- a second isolated DC/DC converter configuration comprising a resonance circuit formed by:
- the first inductance (L1), and
- the first capacitor (C1), a second terminal of which is connected to the second primary terminal (54b) of the power converter (52);
- a third configuration forming an isolated DC/DC converter comprising a resonance circuit formed by:
- the first capacitor (C1), a second terminal of which is connected to the second primary terminal (54b) of the power converter (52),
- the second capacitor (C2), a second terminal of which is connected to the second primary terminal (54b) of the power converter (52), and
- the first inductance (L1).

2. A system according to claim 1, wherein the switching means comprises a first (K1), a second (K2) and a third (K3) switch.

3. A system according to claim 2, wherein:
- the second switch (K2) is arranged between the first capacitor C1 and the second primary terminal (54b) of the power converter (52);
- the first switch (K1) is arranged between the first branch (40) of the first H-bridge (34) and the second primary terminal (54b) of the power converter (52);
- the third switch (K3) is arranged between the second capacitor (C2) and the second primary terminal (54b) of the power converter (52).

4. A system according to claim 2 or 3, wherein the switching means comprises a reconfiguration module, capable of individually controlling the first, second and third switches so as to maintain them in an open and/or closed state.

5. A system according to claim 4, wherein the reconfiguration module controls the first, second and third switches such that :
- in the first configuration, the first switch (K1) is kept closed, and the second (K2) and third (K3) switches are kept open;
- in the second configuration, the second switch (K2) is kept closed, and the first (K1) and third (K3) switches are kept open;
- in the third configuration, the first switch (K1) is kept open, and the second (K2) and third (K3) switches are kept closed.

6. A system according to one of the preceding claims, comprising a second inductance (L2), arranged between the primary terminals (54a, 54b) of the power converter (52), so that in the second configuration, the resonance circuit is formed by the first inductance (L1), the second inductance (L2) and the first capacitor (C1), a second terminal of which is connected to the second primary terminal (54b) of the power converter (52)

7. A system according to one of the preceding claims 2 to 6, wherein the first (K1), second (K2) and third (K3) switches comprise switches and/or transistors.

8. A system according to one of the preceding claims, wherein a capacitor (Cbus1) is arranged between the terminals of the second branch (42) of the first H-bridge (34).

9. A system according to one of the preceding claims, wherein a capacitor (Cbus2) is arranged between the terminals of the second branch (46) of the second H-bridge (36).

10. A system according to one of the preceding claims having an operating range between 220 V and 330 V at the terminals of the first bus.

11. A system according to one of the preceding claims, wherein the power converter is an isolated, single-phase transformer.

12. A system according to one of the preceding claims, comprising a third high voltage DC bus (Vbus3) and wherein the power converter comprises third and fourth secondary terminals connected respectively to a first branch and a second branch of a third H-bridge arranged across the third high voltage DC bus (Vbus3).

13. A system according to one of the preceding claims, wherein the first and/or second H-bridge each comprises four power components.

14. A system according to claim 13, wherein the four power components of the first bridge are transistors.

15. A system according to claim 13 or 14, wherein the four power components of the first bridge are either diodes or transistors.
